(19) **Europäisches Patentamt**

**European Patent Office**

**Office européen des brevets**

(11) **EP 1 384 140 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(51) Int Cl.[7]: **G06F 5/06**

(21) Anmeldenummer: 02735264.0

(22) Anmeldetag: **16.04.2002**

(86) Internationale Anmeldenummer:
**PCT/EP2002/004216**

(87) Internationale Veröffentlichungsnummer:
**WO 2002/088928 (07.11.2002 Gazette 2002/45)**

(54) **VERFAHREN UND VORRICHTUNG ZUR ANPASSUNG DER DATENRATE EINES DATENSTROMS**

METHOD AND DEVICE FOR ADAPTING THE DATA RATE OF A DATA STREAM

PROCEDE ET DISPOSITIF POUR ADAPTER LE DEBIT DE DONNEES D'UN FLUX DE DONNEES

(84) Benannte Vertragsstaaten:
**DE GB**

(30) Priorität: **30.04.2001 DE 10121198**

(43) Veröffentlichungstag der Anmeldung:
**28.01.2004 Patentblatt 2004/05**

(73) Patentinhaber: **Infineon Technologies AG**
**81669 München (DE)**

(72) Erfinder:
• **GRANIG, Wolfgang**
  **A-9751 Sachsenburg (AT)**
• **MANDL, Christian**
  **A-9500 Villach (AT)**

(74) Vertreter: **Banzer, Hans-Jörg, Dipl.-Ing.**
**Kraus & Weisert**
**Patent- und Rechtsanwälte**
**Thomas-Wimmer-Ring 15**
**80539 München (DE)**

(56) Entgegenhaltungen:
**WO-A-96/01535          US-A- 5 535 209**

• **STEENDAM ET AL: "Guard time optimization for OFDM transmission over fading channels" IEEE BENELUX CHAPTER ON VEHICULAR TECHNOLOGY AND COMMUNICATIONS. SYMPOSIUM ON COMMUNICATIONS AND VEHICULAR TECHNOLOGY. SCVT. PROCEEDINGS, Oktober 1996 (1996-10), Seiten 42-48, XP002243075 Ghent**

**Beschreibung**

Die vorliegende Erfindung betrifft ein Verfahren zur Anpassungen der Datenrate eines Datenstroms, insbesondere eines datenpaketorientierten Datenstroms, sowie eine entsprechende Vorrichtung, wobei Datenpakete mit einer ersten Datenrate in einen FIFO-Speicher ("First In First Out") geschrieben und mit einer zweiten Datenrate aus dem FIFO-Speicher ausgelesen werden.

Bei vielen DMT-Datenübertragungen ("Discrete Multi Tone"), wie beispielsweise dem modernen COFDM-Modulationsverfahren ("Coded Orthogonal Frequency Division Multiplex"), werden die zu übertragenden Daten, d.h. die einzelnen Bits bzw. Bytes, wie folgt kodiert. Die Daten, beispielsweise MPEG-Datenpakete ("Moving Picture Experts Group"), werden zur Kanalkodierung mit einem Block-Code als äußerem Code und einem Faltungs-Code als innerem Code versehen, um die Datenübertragung sicherer zu gestalten. Dabei werden den zu übertragenden Daten- bzw. Nachrichtenbits redundante Bits hinzugefügt, welche die Übertragungssicherheit erhöhen. Die mit einer derartigen Redundanz versehenen Daten werden auf eine Vielzahl unterschiedlicher Träger mithilfe einer inversen Fouriertransformation ("Inverse Fast Fourier Transformation", IFFT) aufmoduliert, wobei die einzelnen Träger zusätzlich QPSK ("Quadrature Phase Shift Keying")-, 16QAM ("Quadrature Amplitude Modulation")- oder 64QAM-moduliert sein können. Abhängig von der Anzahl der verwendeten Träger wird dabei beispielsweise zwischen einem 2k-Modus (1512 Träger) und einem 8k-Modus (6048 Träger) unterschieden. Das daraus resultierende OFDM-Signal setzt sich somit aus einer Vielzahl von modulierten Trägern zusammen.

Jedes somit erhaltene OFDM-Symbol wird eine bestimmte Zeit gesendet, wobei diese Zeit als "Useful Time" bezeichnet wird und von der jeweils verwendeten Übertragungsbandbreite abhängt. So sind beispielsweise Übertragungsbandbreiten von 8MHz, 7MHz und 6MHz bekannt, wobei das längste OFDM-Symbol bei einer Bandbreite von 6MHz zu erwarten ist. Bei einer Mehrwegausbreitung ist es jedoch auch möglich, dass Echos das eigentliche OFDM-Signal beeinträchtigen. Um dies so gering wie möglich zu halten, wurde eine als "Guard Period" bezeichnete Schutzzeit eingeführt, in welcher kein Symbol gesendet wird und demzufolge das Signal Zeit hat, sich einzuschwingen und Echos abklingen zu lassen. Die "Guard Period" beträgt beispielsweise 1/32, 1/16, 1/8 oder 1/4 der "Useful Time", wobei die "Guard Period" und "Useful Time" zusammen die Symbolzeit ("Symbol Time") des jeweiligen Symbols ergeben.

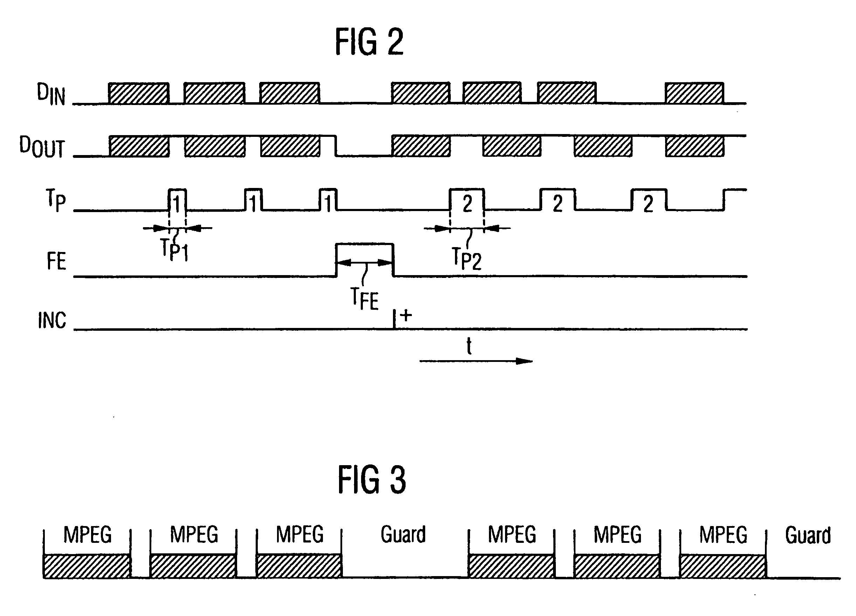

In Figur 3 ist ein Beispiel für den zeitlichen Verlauf der Datenausgabe bei einer Blockverarbeitung, z.B. gemäß einem COFDM-Modulationsverfahren, von MPEG-Datenpaketen dargestellt, wobei aus Figur 3 auch die jeweils eingefügte "Guard Period" ersichtlich ist. Die Anzahl der MPEG-Datenpakete pro OFDM-Symbol hängt - wie nachfolgend noch näher erläutert wird - von der Modulationsart der einzelnen Träger, von der Anzahl der verwendeten Träger und von der verwendeten Coderate ab.

Beim Empfang von Daten bzw. OFDM-Symbolen, welche gemäß dem zuvor beschriebenen Verfahren kodiert bzw. moduliert worden sind, erfolgt die Datenverarbeitung genau in umgekehrter Reihenfolge, so dass die gewünschten Daten (z.B. MPEG-Datenpakete) nach der Durchführung einer Faltungs-Dekodierung und einer Blockdekodierung zur Verfügung stehen.

Ein mit dem zuvor beschriebenen COFDM-Modulationsverfahren verbundenes Problem besteht darin, dass dieses Verfahren ein blockorientiertes Übertragungsverfahren darstellt, wobei MPEG-Decoder meist einen kontinuierlichen Datenstrom voraussetzen, um deren Funktion, insbesondere deren FIFO-Funktionalität, zu gewährleisten. Aus diesem Grund ist eine geeigneten Datenratenanpassung erforderlich.

Die Datenrate am Ausgang eines COFDM-Empfängers lässt sich gemäß folgender Formel berechnen:

$$X_{OUT} = \frac{CARRIER \cdot \dfrac{1}{CRATE} \cdot \dfrac{bits}{CARRIER}}{(1 + GUARD) \cdot USEFUL\_TIME} = \frac{\dfrac{bits}{CRATE}}{(1 + GUARD) \cdot USEFUL\_TIME}$$

Dabei bezeichnet der Parameter CARRIER die Anzahl der verwendeten Träger, beispielsweise 1512 oder 6048, während CRATE die bei der Faltungscodierung verwendete Coderate, beispielsweise 1/2, 2/3, 3/4, 5/6 oder 7/8, bezeichnet. Der Ausdruck bits/CARRIER weist bei einer QPSK-Modulation den Wert 2, bei einer 16QAM-Modulation den Wert 4 und bei einer 64QAM-Modulation den Wert 6 auf. Mit dem Parameter GUARD wird das Verhältnis zwischen der "Guard Period" und der "Useful Time" bezeichnet, so dass der Parameter GUARD beispielsweise den Wert 1/4, 1/8, 1/16 oder 1/32 aufweisen kann. Der Parameter USEFUL TIME bezeichnet die Dauer der zuvor beschriebenen "Useful Time", in welcher ein OFDM-Symbol gesendet wird, wobei die "Useful Time" 896 ps bei einer Übertragungsbandbreite von 8MHz, 1024 µs bei einer Übertragungsbandbreite von 7MHz oder 1194,7 µs bei einer Übertragungsbandbreite von 6MHz beträgt.

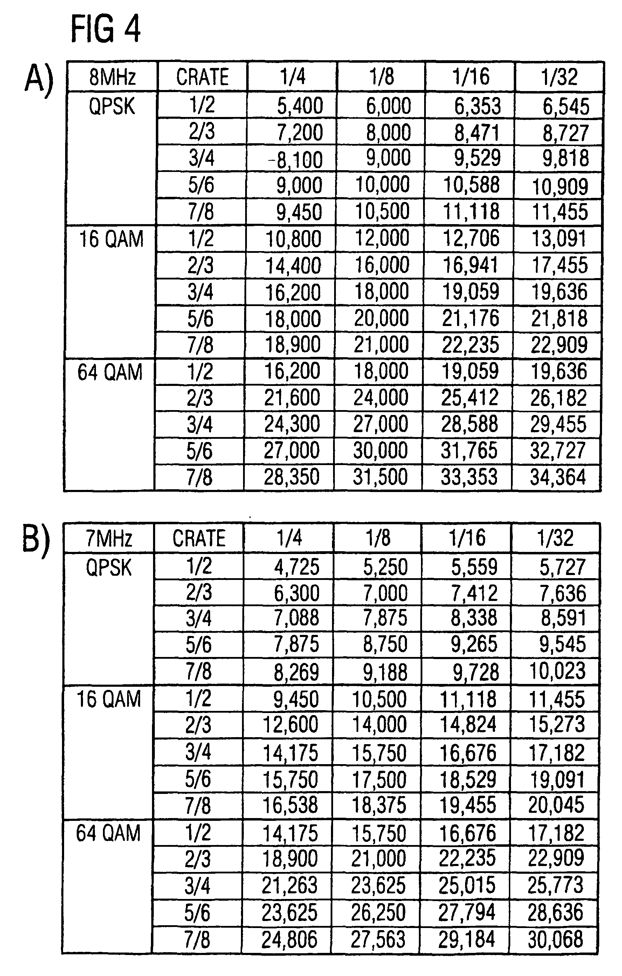

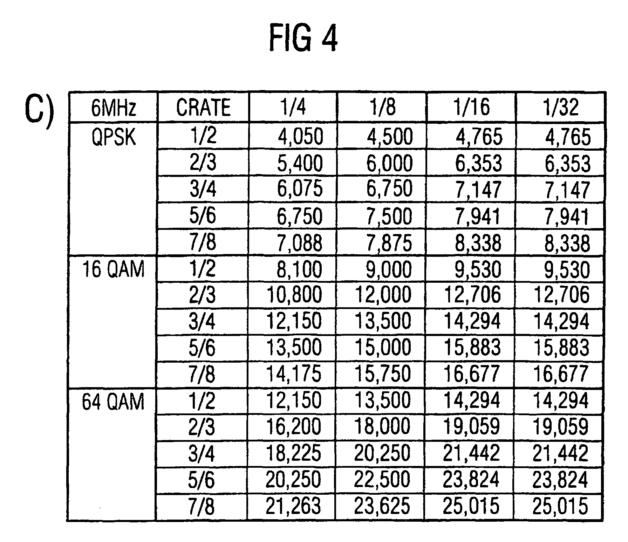

In Figur 4A ist für eine Übertragungsbandbxeite von BMHz die Datenrate $X_{OUT}$ am Ausgang eines COFDM-Empfängers für unterschiedliche Werte von CRATE, GUARD und für unterschiedliche Modulationsverfahren bei einer Übertragungsbandbreite von 8MHz dargestellt. In Figur 4B bzw. Figur 4C sind entsprechende Werte für die Ausgangsdatenrate für eine Übertragungsbandbreite von 7MHz bzw. 6MHz dargestellt. Die Ausgangsdatenrate ist jeweils in Mbits/s dargestellt.

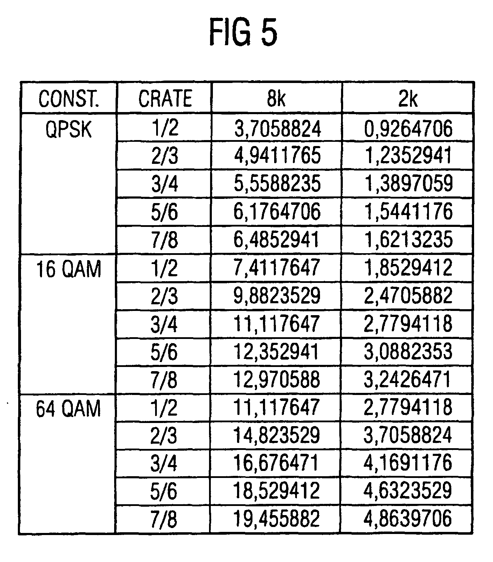

Aus der obigen Formel ist ersichtlich, dass die Ausgangsdatenrate unabhängig von der Anzahl der verwendeten Träger, d.h. unabhängig von dem eingesetzten Modus (z.B. 2k-Modus oder 8k-Modus) ist. Unterschiedlich bleibt jedoch nach wie vor die Anzahl der MPEG-Datenpakete pro OFDM-Symbol, was aus der Darstellung von Figur 5 ersichtlich ist.

In Figur 5 ist für eine konstante Übertraqungsbandbreite die Anzahl der MPEG-Datenpakete pro OFDM-Symbol für die unterschiedlichen Modulationsarten und für unterschiedliche Werte CRATE der Faltungscoderate dargestellt, wobei zwischen dem 8k-Modus und dem 2k-Modus unterschieden wird. Aus Figur 5 ist ersichtlich, dass die Anzahl der MPEG-Datenpakete pro OFDM-Symbol abhängig von dem jeweils verwendeten Modus (2k-Modus oder 8k-Modus) abweicht.

Zur Anpassung der Datenrate eines Datenstroms ist die Verwendung eines FIFO-Speichers bekannt, wobei die Daten bzw. Datenpakete in den FIFO-Speicher mit einer bestimmten Datenrate eingeschrieben und mit einer anderen Datenrate ausgelesen werden können. Der FIFO-Speicher kann beispielsweise in Form eines sogenannten Dual-Port-RAM-Speichers ausgestaltet sein.

In Figur 6A ist ein Beispiel für einen Dual-Port-RAM-FIFO-Speicher 1 dargestellt, welcher über einen Dateneingangsanschluss zum Einschreiben von Daten bzw.

Datenpaketen $D_{IN}$ und einen Datenausgangsanschluss zum Auslesen von Daten bzw. Datenpaketen $D_{OUT}$ verfügt. An einen weiteren Anschluss wird ein Taktsignal $CLK_{IN}$ für das Einschreiben der Daten angelegt, während zum Auslesen der Daten ein variables und konfigurierbares Taktsignal $CLK_{OUT}$ verwendet wird, so dass durch entsprechende Einstellung dieses Auslesetaktsignals $CLK_{OUT}$ die Datenrate wunschgemäß angepasst werden kann.

Ein Problem bei Verwendung der in Figur 6A dargestellten Anordnung besteht jedoch darin, dass lediglich durch ausreichend große Dimensionierung des FIFO-Speichers 1 sichergestellt werden kann, dass die FIFO-Warteschlange nicht überläuft. Zudem müssen mehrere verschiedene Taktsignale auf ein und demselben Chipbaustein zur Verfügung gestellt werden, was bei der Chip-Synthese und beim Testen des Chips kompliziert ist. Zudem benötigen Dual-Port-RAM-FIFO-Speicher eine relativ hohe Chip-Fläche.

Eine weitere bekannte Möglichkeit zur Datenratenanpassung ist in Figur 6B dargestellt. Dabei ist in Figur 6B ein FIFO-Speicher 1 in Kombination mit einem vorgeschalteten Modul 4 und einem nachgeschalteten Modul 5 dargestellt. Bei dem FIFO-Speicher 1 handelt es sich im Prinzip lediglich um einen Zwischen-FIFO-Speicher, wobei die Eingangsdaten $D_{IN}$ zusätzlich in dem vorgeschalteten Modul 4 und in dem nachgeschalteten Modul 5 verteilt werden. Dadurch werden die Daten derart verarbeitet, dass am Ausgang der entsprechenden blockverarbeitenden Schaltkreise die Daten jeweils gemäß den entsprechenden Bedürfnissen verteilt sind. Der Vorteil der in Figur 6B dargestellten Anordnung besteht darin, dass der FIFO-Speicher 1 nicht so genau wie bei der in Figur 6A dargestellten Anordnung arbeiten muss, da eine zusätzliche Gleichverteilung durch das nachgeschaltete Modul 5 bzw. den nachgeschalteten Funktionsblock 5 möglich ist. Nachteilig bei der in Figur 6B dargestellten Anordnung ist jedoch, dass die Auslegung des FIFO-Speichers 1 wesentlich komplizierter ist, da die Datenraten innerhalb der Anordnung bzw. innerhalb des Systems oft nicht genau bekannt sind bzw. von der Implementierung des vorhergehenden Moduls 4 bzw. des vorhergehenden Funktionsblocks 4 abhängen.

Der vorliegenden Erfindung liegt die Aufgabe zugrunde, ein Verfahren sowie eine entsprechende Vorrichtung zur Anpassung der Datenrate eines Datenstroms bereitzustellen, womit auf möglichst einfache Art und Weise eine möglichst genaue Anpassung der Datenrate erzielt werden kann.

Diese Aufgabe wird erfindungsgemäß durch ein Verfahren mit den Merkmalen des Anspruches 1 bzw. einer Vorrichtung mit den Merkmalen des Anspruches 8 gelöst. Die Unteransprüche definieren jeweils bevorzugte und vorteilhafte Ausführungsformen der vorliegenden Erfindung.

Die vorliegende Erfindung geht davon aus, dass Datenpakete eines Datenstroms in einen FIFO-Speicher geschrieben und wieder ausgelesen werden. Das Schreiben der Datenpakete in den FIFO-Speicher und das Auslesen der Datenpakete aus dem FIFO-Speicher kann dabei mit unterschiedlichen Datenraten erfolgen.

Zur Erzielung der gewünschten Datenrate am Ausgang des FIFO-Speichers wird folgende Regelschleife implementiert, welche eine adaptive Datenratenanpassung ermöglicht.

Zwischen jedem ausgegebenen bzw. ausgelesenen Datenpaket wird eine voreingestellte oder festgelegte zeitliche Pause bzw. Zeitspanne eingefügt, d.h. nach jedem ausgegebenen Datenpaket wird eine bestimmte Zeit gewartet, bis das nächste Datenpaket ausgegeben wird. Zudem wird überwacht, wann der FIFO-Speicher leerläuft. In Abhängigkeit von der Summe der einzelnen Pausen, welche zwischen den zwischen zwei aufeinanderfolgenden Leerläufen des FIFO-Speichers ausgegebenen bzw. ausgelesenen Datenpaketen eingefügt worden sind, wird schließlich für die nachfolgend auszulesenden Datenpakete ein neuer gültiger Pausenwert bestimmt und eingestellt.

Im Falle eines Leerlaufs des FIFO-Speichers entsteht eine zusätzliche Pause, die vorzugsweise ebenfalls gemessen wird. Ist der FIFO-Speicher leergelaufen, kann die längste bzw. maximale Pause zwischen zwei aufeinanderfolgenden Datenpaketen ermittelt werden, welche der Summe aus der zwischen den ausgegebenen Datenpaketen eingefügten Pause und der durch den Leerlauf bedingten zusätzlichen Pause entspricht. Mit dieser maximalen bzw.

längsten Pause wird nunmehr die Summe der einzelnen Pausen, welche zwischen den zwischen zwei aufeinanderfolgenden Leerläufen des FIFO-Speichers ausgegebenen Datenpaketen eingefügt worden sind, verglichen, um davon abhängig einen neuen Wert für die zwischen nachfolgend auszugebenden Datenpaketen einzufügende Pause zu bestimmen. Dabei ist der neue Wert für die zwischen zwei aufeinanderfolgende Datenpakete einzufügende Pause derart zu bemessen, dass die Summe der einzelnen Pausen, welche zwischen den zwischen zwei aufeinanderfolgenden Leerläufen des FIFO-Speichers ausgelesenen Datenpaketen eingefügt werden, kleiner als die längste bzw. maximale Pause zwischen zwei Datenpakete (im Falle eines FIFO-Leerlaufs) ist, wobei es sinnvoll ist, dass diesbezüglich eine bestimmte Reserve berücksichtigt wird, um sicherzustellen, dass der FIFO-Speicher stets sicher leerläuft (und nicht überlaufen kann). Zudem kann bei Berücksichtigung einer bestimmten Reserve gewährleistet werden, dass eine bestimmte maximale Pause nicht unterschritten wird, wobei über die Pause auch der Start eines entsprechenden Symbols, beispielsweise eines OFDM-Symbols, ermittelt werden kann.

Wird die eingefügte Pause größer als die Dauer eines Datenpakets, kann die Datenausgabetaktfrequenz reduziert, insbesondere um den Faktor 2 verringert, werden, wobei in diesem Fall die zuvor beschriebene Regelschleife neu von vorne starten muss, um eine neue Regelung der Datenrate am Ausgang des FIFO-Speichers vorzunehmen.

Obwohl die vorliegende Erfindung bevorzugt zur Anpassung der Datenrate am Ausgang eines COFDM-Empfängers bei der Verarbeitung von MPEG-Datenpaketen eingesetzt werden kann, ist die vorliegende Erfindung selbstverständlich nicht auf diesen bevorzugten Anwendungsbereich beschränkt, sondern kommt überall dort zur Anwendung, wo eine Anpassung der Datenrate eines eine Folge von Datenpaketen umfassenden Datenstroms gewünscht ist. Diesbezüglich kann die vorliegende Erfindung beispielsweise auch in ATM-Datenübertragungsverfahren ("Asynchronous Transfer Mode") oder Ethernet-Datenübertragungsverfahren etc. eingesetzt werden.

Die vorliegende Erfindung wird nachfolgend näher unter Bezugnahme auf die beigefügte Zeichnung anhand eines bevorzugten Ausführungsbeispiels erläutert.

Figur 1 zeigt ein vereinfachtes Blockschaltbild einer erfindungsgemäßen Vorrichtung basierend auf einem FIFO-Speicher zur Anpassung der Datenrate eines Datenstroms,

Figur 2 zeigt den zeitlichen Verlauf verschiedener Signale bei dem in Figur 1 dargestellten Ausführungsbeispiel zur Verdeutlichung der erfindungsgemäßen Funktionsweise,

Figur 3 zeigt den zeitlichen Verlauf der Ausgabe von MPEG-Datenpaketen bei einer Blockverarbeitung,

Figur 4A-Figur 4C zeigen Beispiele für die Ausgangsdatenrate eines COFDM-Empfängers für verschiedene Übertragungsbandbreiten,

Figur 5 zeigt ein Beispiel für die Anzahl der MPEG-Datenpakete pro OFDM-Symbol am Ausgang eines COFDM-Empfängers im 8k-Modus und 2k-Modus, und

Figur 6A und Figur 6B zeigen Darstellungen von bekannten Lösungen zur Erzielung einer Datenratenanpassung unter Verwendung eines FIFO-Speichers.

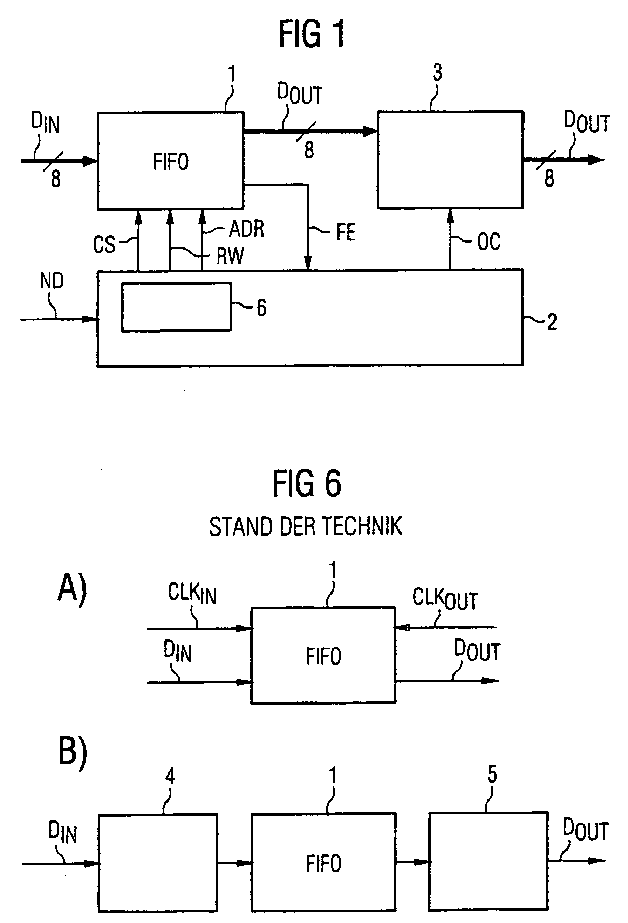

In Figur 1 ist ein FIFO-Speicher 1 dargestellt, in den die Daten $D_{IN}$ eines Datenstroms geschrieben und in Form von Ausgangsdaten $D_{OUT}$ ausgelesen werden. Bei dem dargestellten Ausführungsbeispiel wird davon ausgegangen, dass jeweils acht Bits parallel eingeschrieben bzw. ausgelesen werden. Bei den Eingangsdaten $D_{IN}$ kann es sich insbesondere um MPEG-Datenpakete eines COFDM-Empfängers handeln, deren Datenrate für eine nachfolgende Verarbeitung in einem (nicht gezeigten) MPEG-Decoder angepasst werden soll. Dabei wird idealerweise angestrebt, dass der Eingangsdatenstrom eines derartigen MPEG-Decoders möglichst gleich verteilte MPEG-Datenpakete mit kleinen Zwischenlücken bzw. Pausen aufweist.

Der in Figur 1 gezeigte FIFO-Speicher 1 wird von einer FIFO-Steuerung 2 angesteuert, welche Bestandteil einer Regelschleife zur adaptiven Datenratenanpassung ist und die am Ausgang des FIFO-Speichers 1 auftretende Datenrate gemäß dem nachfolgend näher beschriebenen Verfahren einstellt.

Von der FIFO-Steuerung 2 wird ein Steuersignal RW ("Read/Write") an den FIFO-Speicher 1 angelegt, welches zusammen mit einem Adressierungssignal ADR das Einschreiben eines Datenpakets in den FIFO-Speicher 1 und das Auslesen eines Datenpakets aus dem FIFO-Speicher 1 steuert. Der FIFO-Steuerung 2 ist ein Steuersignal ND ("New Data") zugeführt, welches der FIFO-Steuerung 2 mitteilt, wenn neue Daten zum Einschreiben in den FIFO-Speicher 1 vorliegen. Darüber hinaus erzeugt die FIFO-Steuerung 2 ein weiteres Steuersignal CS ("Chip Select") für den FIFO-Speicher 1, welches einen Speicherzugriff zur Einsparung von Energie nur dann ermöglicht, wenn neue Daten zum Schreiben in den FIFO-Speicher 1 vorliegen oder Daten am Ausgang des FIFO-Speichers 1 zum Auslesen vorhanden sind. Ober ein weiteres Steuersignal FE ("FIFO Empty") überwacht die FIFO-Steuerung 2, ob ein Leerlauf des FIFO-Speichers 1 auftritt oder nicht. Die Funktionsweise der FIFO-Steuerung 2 ist folgendermaßen.

Ein Datenpaket wird in den FIFO-Speicher 1 geschrieben und wieder ausgegeben. Dabei wird nach jedem ausgegebenen Datenpaket eine bestimmte Zeit Tp gewartet, bis das nächste Datenpaket ausgegeben wird. Zu diesem Zweck kann die FIFO-Steuerung 2 einen Zähler 6 aufweisen, der diese Zeitspanne bzw. Pause Tp durch Zählen entsprechender Taktimpulse überwacht.

Im Falle eines Leerlaufs des FIFO-Speichers 1 entsteht dadurch eine zusätzliche Pause $T_{FE}$, die von der FIFO-Steuerung 2 beispielsweise mithilfe eines Null-Zählers entsprechend gemessen bzw. erfasst werden kann. Darüber hinaus weist die FIFO-Steuerung 2 einen weiteren Zähler 6 auf, welcher die Anzahl der Datenpakete seit dem vorhergehenden Leerlauf des FIFO-Speichers bis zu dem aktuellen Leerlauf des FIFO-Speichers 1 zählt.

Mithilfe dieser Information kann die FIFO-Steuerung 2 die Summe der Pausen Tp, welche zwischen die zwischen zwei aufeinanderfolgende Leerläufe des FIFO-Speichers 1 ausgegebenen Datenpakete eingefügt worden sind, wie folgt ermitteln:

$$T_{\Sigma} = N \cdot T_{Pi}$$

Dabei bezeichnet N die Anzahl der Datenpakete, welche zwischen dem vorhergehenden Leerlauf des FIFO-Speichers 1 und dem aktuellen Leerlauf ausgegeben worden sind, und $T_{Pi}$ den augenblicklich gültigen Pausenwert für die Pause bei der Ausgabe von Datenpaketen aus dem FIFO-Speicher 1.

Darüber hinaus kann die FIFO-Steuerung 2 die im Falle eines FIFO-Leerlaufs auftretende größte bzw. längste Pause $T_{Pmax}$ zwischen den Datenpaketen ermitteln, wobei gilt:

$$T_{Pmax} = T_{Pi} + T_{FE}$$

Durch Vergleich des Summenpausenwerts $T_{\Sigma}$ mit dem Wert der größten Pause $T_{Pmax}$ kann die FIFO-Steuerung 2 ermitteln, ob beispielsweise eine Erhöhung der Pause zwischen zwei aufeinanderfolgenden Datenpaketen von beispielsweise $T_{P1}$ nach $T_{P2}$ (vgl. Figur 2) möglich ist. Dabei ist bei der Einstellung der Pause zwischen zwei aufeinanderfolgenden Datenpaketen zu beachten, dass folgende Beziehung eingehalten wird:

$$N \cdot T_{Pi} < T_{Pmax}$$

Das heißt im Falle einer Pausenerhöhung muss das Produkt aus der Summe aus der aktuell eingefügten Pause und der gewählten Pausenerhöhung einerseits und der Anzahl der Datenpakete zwischen zwei aufeinanderfolgenden FIFO-Leerläufen andererseits kleiner sein als die im Falle einer Pausenerhöhung bei einem FIFO-Leerlauf zwischen den Datenpaketen auftretende größte Pause. Bei dem in Figur 2 dargestellten Beispiel bedeutet dies, dass gelten muss:

$$N \cdot T_{P2} < T_{Pmax} \text{ mit } T_{P2} = T_{P1} + \Delta T_P$$

Dabei bezeichnet $\Delta T_P$ die gewählte Pausenerhöhung ausgehend von der aktuell eingefügten Pause $T_{P1}$.

In Figur 2 ist dargestellt, wie im Falle eines FIFO-Leerlaufs nach Ablauf der durch den FIFO-Leerlauf bedingten zusätzlichen Pause $T_{FE}$ der Wert der aktuell eingefügten Pause $T_{P1}$ inkrementiert wird, um einen neuen Wert $T_{P2}$ für die zwischen die Datenpakete eingefügte Pause zu erhalten (vgl. den in Figur 2 dargestellten Signalverlauf INC).

Bei der Wahle eines neuen Pausenwerts ist es sinnvoll, eine bestimmte Reserve zu berücksichtigen, um sicherzustellen, dass der FIFO-Speicher 1 sicher immer leerläuft, nicht überlaufen kann und zudem eine bestimmte maximale Pause $T_{Pmax}$ nicht unterschritten wird. Für das in Figur 2 dargestellte Beispiel muss demnach gelten:

$$N \cdot T_{P2} + T_{Res} < T_{Pmax}$$

Dabei bezeichnet $T_{Res}$ die bei der Erhöhung des Pausenwerts zu berücksichtigende Reserve.

Wird die bei der Datenpaketausgabe zwischen zwei aufeinanderfolgenden Datenpaketen eingefügte Pause infolge einer Pausenerhöhung größer als die Dauer eines ausgegebenen Datenpakets, kann die FIFO-Steuerung 2 die Datenausgabe-Taktfrequenz reduzieren, insbesondere halbieren (bzw. um den Faktor 2 verringern). In diesem Fall muss die FIFO-Steuerung 2 jedoch die zuvor beschriebene Regelschleife mit der adaptiven Datenratenanpassung, welche im Prinzip einer adaptiven Anpassung der Pause Tp zwischen zwei aufeinanderfolgenden Datenpaketen entspricht, von vorne starten, um eine optimale Datenratenanpassung gewährleisten zu können.

Bei dem in Figur 1 dargestellten Ausführungsbeispiel werden die aus dem FIFO-Speicher 1 ausgelesenen Daten $D_{OUT}$ einer Ausgabeschnittstelle 3 zugeführt, welche von der FIFO-Steuerung 2 über ein Steuersignal OC ("Out Control") angesteuert wird. Diese Ausgabeschnittstelle 3 kann eine Umsetzung in ein vorgegebenes Datenformat oder - falls dies erforderlich sein sollte - auch eine Parallel/Seriell-Umsetzung der ausgegebenen Daten $D_{OUT}$ vornehmen. Dabei kann über das Steuersignal OC der Ausgabeschnittstelle 3 mitgeteilt werden, wann die Daten tatsächlich ausgegeben werden sollen.

Wie aus der Darstellung von Figur 2 ersichtlich ist, wird für den Fall, dass die Eingangsdaten DIN beispielsweise in Form von MPEG-Datenpaketen vorliegen, mithilfe der vorliegenden Erfindung ein Herausfiltern von sogenannten Frames, welche mehrere MPEG-Datenpakete umfassen, erzielt. Auf diese Weise kann die eingangs beschriebene "Guard Period" oder Schutzzeit eliminiert bzw. herausgeglättet werden.

Allgemein ist die vorliegende Erfindung somit grundsätzlich überall dort bevorzugt zum Einsatz geeignet, wo spezielle Frames herausgefiltert werden sollen, um die daraus resultierenden Daten anschließend beispielsweise mit einer geringeren Datenrate zu verarbeiten, so dass eine "Buffer-Filter-Datenratenanpassung" realisiert werden kann.

**Patentansprüche**

1. Verfahren zur Anpassung der Datenrate eines Datenstroms,
   wobei Datenpakete des Datenstroms mit einer ersten Datenrate in einen FIFO-Speicher (1) geschrieben und mit einer zweiten Datenrate aus dem FIFO-Speicher (1) ausgegeben werden,
   **dadurch gekennzeichnet,**
   **dass** die Datenpakete mit einer festgelegten zeitlichen Pause ($T_P$) zwischen den Datenpaketen ausgegeben werden,
   **dass** eine im Falle eines Leerlaufs des FIFO-Speichers (1) auftretende zusätzliche Pause ($T_{FE}$) erfasst und daraus eine maximale Pause zwischen den Datenpaketen ermittelt wird, und
   **dass** in Abhängigkeit von einem Vergleich der Summe der einzelnen Pausen ($T_P$), welche zwischen den zwischen zwei aufeinanderfolgenden Leerläufen des FIFO-Speichers (1) ausgegebenen Datenpaketen eingefügt werden, und der maximalen Pause der Wert für die Pause ($T_P$), welche zwischen nachfolgend auszugebenden Datenpakete einzufügen ist, eingestellt wird.

2. Verfahren nach Anspruch 1,
   **dadurch gekennzeichnet,**
   **dass** die maximale Pause durch Berechnen der Summe der zwischen den Datenpaketen eingefügten Pause ($T_P$) und der infolge eines Leerlaufs des FIFO-Speichers (1) auftretenden zusätzlichen Pause ($T_{FE}$) ermittelt wird.

3. Verfahren nach Anspruch 1 oder 2,
   **dadurch gekennzeichnet,**
   **dass** der Wert der zwischen den aus dem FIFO-Speicher (1) ausgegebenen Datenpaketen eingefügten Pause ($T_P$) erfasst wird,
   **dass** die Anzahl der zwischen den zwei aufeinanderfolgenden Leerläufen des FIFO-Speichers (1) ausgegebenen Datenpakete erfasst wird, und
   **dass** die Summe der einzelnen Pausen ($T_P$), welche zwischen den zwischen den zwei aufeinanderfolgenden Leerläufen des FIFO-Speichers (1) ausgegebenen Datenpaketen eingefügt wird, durch Multiplikation der erfassten Anzahl der Datenpakete mit dem erfassten Wert der Pause ($T_P$) ermittelt wird.

4. Verfahren nach Anspruch 3,
   **dadurch gekennzeichnet,**
   **dass** der Wert der Pause ($T_P$), der Wert der im Falle eines Leerlaufs des FIFO-Speichers (1) auftretenden zusätzlichen Pause ($T_{FE}$) und die Anzahl der zwischen zwei aufeinanderfolgenden Leerläufen des FIFO-Speichers (1) ausgegebenen Datenpakete mithilfe eines Zählers (6) erfasst wird.

5. Verfahren nach einem der vorhergehenden Ansprüche,
   **dadurch gekennzeichnet,**
   **dass** ein neuer Wert für die zwischen den aus dem FIFO-Speicher (1) ausgegebenen Datenpaketen eingefügte Pause ($T_P$) derart eingestellt wird, dass die Summe der daraus resultierenden einzelnen Pausen ($T_P$), welche zwischen den zwischen zwei aufeinanderfolgenden Leerläufen des FIFO-Speichers (1) ausgegebenen Datenpaketen eingefügt werden, kleiner als der Wert der maximalen Pause im Falle eines Leerlaufs des FIFO-Speichers (1) ist.

6. Verfahren nach Anspruch 5,
**dadurch gekennzeichnet,**
**dass** ein neuer Wert für die zwischen den aus dem FIFO-Speicher (1) ausgegebenen Datenpaketen eingefügte Pause derart eingestellt wird, dass die Summe der einzelnen Pausen ($T_P$), welche zwischen den zwischen zwei aufeinanderfolgenden Leerläufe des FIFO-Speichers (1) ausgegebenen Datenpaketen eingefügt werden, addiert mit einem bestimmten Reservewert kleiner als der Wert der maximalen Pause zwischen den Datenpaketen ist.

7. Verfahren nach einem der vorhergehenden Ansprüche,
**dadurch gekennzeichnet,**
**dass** die Taktfrequenz, mit welcher die Daten der Datenpakete aus dem FIFO-Speicher (1) ausgegeben werden, halbiert wird, falls die zwischen den ausgegebenen Datenpaketen eingefügte Pause ($T_P$) größer als die zeitliche Dauer eines Datenpakets ist.

8. Vorrichtung zur Anpassung der Datenrate eines Datenstroms,
mit einem FIFO-Speicher (1), in welchen Datenpakete mit einer ersten Datenrate geschrieben werden und aus welchem die Datenpakete mit einer zweiten Datenrate ausgegeben werden, und
mit einer Speichersteuerung (2) zum Steuern des Schreibens der Datenpakete in den FIFO-Speicher (1) und des Ausgebens der Datenpakete aus dem FIFO-Speicher (1),
**dadurch gekennzeichnet,**
**dass** die Speichersteuerung (2) zur Ansteuerung des FIFO-Speichers (1) derart ausgestaltet ist, dass die Datenpakete aus dem FIFO-Speicher (1) mit einer bestimmten festgelegten zeitlichen Pause ($T_P$) zwischen den Datenpaketen ausgegeben werden,
**dass** die Speichersteuerung (2) zum Erfassen eines Leerlaufs des FIFO-Speichers (1) ausgestaltet ist,
**dass** die Speichersteuerung (2) zum Erfassen einer im Falle eines Leerlaufs des FIFO-Speichers (1) auftretenden zusätzlichen Pause ausgestaltet ist, um den Wert einer maximalen Pause zwischen zwei aufeinanderfolgenden Datenpaketen zu bestimmen, und
**dass** die Speichersteuerung (2) derart ausgestaltet ist, dass sie durch einen Vergleich der Summe der einzelnen Pausen ($T_P$), welche zwischen den zwischen zwei aufeinanderfolgenden Leerläufen des FIFO-Speichers (1) ausgegebenen Datenpaketen eingefügt werden, mit dem Wert der maximalen Pause einen neuen Wert für die Pause ($T_P$), welche zwischen nachfolgend auszugebenden Datenpakete des FIFO-Speichers (1) einzufügen ist, einstellt.

9. Vorrichtung nach Anspruch 8,
**dadurch gekennzeichnet,**
**dass** die Speichersteuerung (2) zur Durchführung des Verfahrens nach einem der Ansprüche 1-7 ausgestaltet ist.

10. Vorrichtung nach Anspruch 8 oder 9,
**dadurch gekennzeichnet,**
**dass** die Speichersteuerung (2) mindestens einen Zähler (6) zum Erfassen des aktuellen Werts der zwischen den aus dem FIFO-Speicher (1) ausgegebenen Datenpaketen eingefügten Pause ($T_P$), der im Falle eines Leerlaufs des FIFO-Speichers (1) auftretenden zusätzlichen Pause und einer Anzahl der zwischen den zwei aufeinanderfolgenden Leerläufen des FIFO-Speichers (1) aus dem FIFO-Speicher (1) ausgegebenen Datenpakete umfasst, wobei die Speichersteuerung (2) die Summe der einzelnen Pausen ($T_P$), welche zwischen den zwischen den zwei aufeinanderfolgenden Leerläufen des FIFO-Speichers (1) ausgegebenen Datenpaketen eingefügt werden, durch Multiplikation der erfassten Anzahl der zwischen den zwei aufeinanderfolgenden Leerläufen ausgegebenen Datenpakete mit dem erfassten aktuellen Wert der eingefügten Pause ($T_P$) ermittelt.

11. Vorrichtung nach einem der Ansprüche 8-10,
**dadurch gekennzeichnet,**
**dass** die Speichersteuerung (2) derart ausgestaltet ist, dass sie einen neuen Wert für die zwischen den aus dem FIFO-Speicher (1) ausgegebenen Datenpaketen eingefügte Pause ($T_P$) derart einstellt, dass die daraus resultierende Summe der einzelnen Pausen ($T_P$), welche zwischen den zwischen zwei aufeinanderfolgenden Leerläufen des FIFO-Speichers (1) ausgegebenen Datenpaketen eingefügt werden, kleiner als der Wert der maximalen Pause ist.

12. Vorrichtung nach Anspruch 11,

**dadurch gekennzeichnet,**

**dass** die Speichersteuerung (2) derart ausgestaltet ist, dass sie einen neuen Wert für die zwischen den aus dem FIFO-Speicher (1) ausgegebenen Datenpaketen eingefügte Pause ($T_P$) derart einstellt, dass die daraus resultierende Summe der einzelnen Pausen ($T_P$), welche zwischen den zwischen zwei aufeinanderfolgenden Leerläufen des FIFO-Speichers (1) ausgegebenen Datenpaketen eingefügt werden, addiert mit einem bestimmten Reservewert kleiner als der Wert der maximalen Pause ist.

13. Vorrichtung nach einem der Ansprüche 8-11,
   **dadurch gekennzeichnet,**
   **dass** die Speichersteuerung (2) zur Halbierung einer Datenausgabetaktfrequenz des FIFO-Speichers (1) ausgestaltet ist, falls der Wert der zwischen den aus dem FIFO-Speicher (1) ausgegebenen Datenpakete eingefügten Pause ($T_P$) größer als die zeitliche Dauer eines Datenpakets ist.

**Claims**

1. Method for adapting the data rate of a data stream, data packets of the data stream being written into a FIFO memory (1) at a first data rate and being output from the FIFO memory (1) at a second data rate, **characterised in that** the data packets are output with a fixed time pause ($T_P$) between the data packets, **in that** an additional pause ($T_{FE}$) occurring in the event of no-load of the FIFO memory (1) is detected and a maximum pause between the data packets ascertained therefrom, and **in that**, as a function of a comparison of the sum of the individual pauses ($T_P$), which are inserted between the data packets output between two successive no-loads of the FIFO memory (1), and the maximum pause, the value for the pause ($T_P$), which is to be inserted between data packets to be successively output, is adjusted.

2. Method according to claim 1, **characterised in that** the maximum pause is ascertained by calculating the sum of the pause ($T_P$) inserted between the data packets and the additional pause ($T_{FE}$) occurring as a consequence of a no-load of the FIFO memory (1).

3. Method according to claim 1 or 2, **characterised in that** the value of the pause ($T_P$) inserted between the data packets output from the FIFO memory (1) is detected, **in that** the number of data packets output between the two successive no-loads of the FIFO memory (1) is detected, and **in that** the sum of the individual pauses ($T_P$), which is inserted between the data packets output between the two successive no-loads of the FIFO memory (1), is ascertained by multiplying the detected number of data packets by the detected value of the pause (Tp).

4. Method according to claim 3, **characterised in that** the value of the pause ($T_P$), the value of the additional pause ($T_{FE}$) occurring in the event of a no-load of the FIFO memory (1) and the number of the data packets output between two successive no-loads of the FIFO memory (1) is detected with the aid of a counter (6).

5. Method according to any one of the preceding claims, **characterised in that** a new value for the pause ($T_P$) inserted between the data packets output from the FIFO memory (1) is adjusted such that the sum of the individual pauses ($T_P$) resulting therefrom, which are inserted between the data packets output between two successive no-loads of FIFO memory (1) is smaller than the value of the maximum pause in the event of a no-load of the FIFO memory (1).

6. Method according to claim 5, **characterised in that** a new value for the pause inserted between the data packets output from the FIFO memory (1) is adjusted such that the sum of the individual pauses ($T_P$), which are inserted between the data packets output between two successive no-loads of the FIFO memory (1), added to a certain reserve value, is smaller than the value of the maximum pause between the data packets.

7. Method according to any one of the preceding claims, **characterised in that** the clock frequency with which the data of the data packet is output from the FIFO memory (1) is halved if the pause ($T_P$) inserted between the output data packets is greater than the duration of a data packet.

8. Device for adapting the data rate of a date stream, comprising a FIFO memory (1) into which data packets are written at a first data rate and from which the data packets are output at a second data rate, and comprising a memory controller (2) for controlling writing of the data packets into the FIFO memory (1) and outputting of the data packets from the FIFO memory (1), **characterised in that** the memory controller (2) is designed to control the FIFO memory (1) such that the data packets are output from the FIFO memory (1) with a certain fixed pause ($T_P$) between the data packets, **in that** the memory controller (2) is designed to detect a no-load of the FIFO memory (1), **in that** the memory controller (2) is designed to detect an additional pause occurring in the event of a no-load of the FIFO memory (1) in order to determine the value of a maximum pause between two successive data packets, and **in that** the memory controller (2) is designed in such a way that, as a result of a comparison of the sum of the individual pauses ($T_P$), which are inserted between the data packets output between two successive no-loads of the FIFO memory (1), with the value of the maximum pause adjusts a new value for the pause ($T_P$) which is to be inserted between data packets of the FIFO memory (1) to be successively output.

**9.** Device according to claim 8, **characterised in that** the memory controller (2) is designed to carry out the method according to claim 1.

**10.** Device according to claim 8 or 9, **characterised in that** the memory controller (2) comprises at least one counter (6) for detecting the current value of the pause ($T_P$) inserted between the data packets output from the FIFO memory (1), the additional pause occurring in the event of a no-load of the FIFO memory (I) and a number of the data packets output from the FIFO memory (1) between the two successive no-loads of the FIFO memory (1), the memory controller (2) ascertaining the sum of the individual pauses ($T_P$), which are inserted between the data packets output between the two successive no-loads of the FIFO memory (1), by multiplying the detected number of data packets output between the two successive no-loads by the detected current value of the inserted pause ($T_P$).

**11.** Device according to claim 8-10, **characterised in that** the memory controller (2) is designed such that it adjusts a new value for the pause ($T_P$) inserted between the data packets output from the FIFO memory (1) such that the sum resulting therefrom of the individual pauses ($T_P$), which are inserted between the data packets output between two successive no-loads of the FIFO memory (1), is smaller than the value of the maximum pause.

**12.** Device according to claim 11, **characterised in that** the memory controller (2) is designed such that it adjusts a new value for the pause ($T_P$) inserted between the data packets output from the FIFO memory (1) such that the sum resulting therefrom of the individual pauses ($T_P$), which are inserted between the data packets output between two successive no-loads of the FIFO memory (1), added to a specific reserve value, is less than the value of the maximum pause.

**13.** Device according to claim 8-11, **characterised in that** the memory controller (2) is designed to halve a data output clock frequency of the FIFO memory (1) if the value of the pause ($T_P$) inserted between the data packets output from the FIFO memory (1) is greater than the duration of a data packet.

**Revendications**

**1.** Procédé d'adaptation du débit de données d'un flux de données, des paquets de données du flux de données étant enregistrés avec un premier débit de données dans une mémoire FIFO (1) et étant sortis avec un second débit de données de la mémoire FIFO (1),
**caractérisé en ce que**
les paquets de données sont sortis avec une pause ($T_P$) de temps définie entre les paquets de données,
**en ce qu'**une pause ($T_{FE}$) supplémentaire apparaissant dans le cas d'une marche à vide de la mémoire FIFO (1) est enregistrée et une pause maximale entre les paquets de données est déterminée à partir de là et **en ce que**, en fonction d'une comparaison de la somme des pauses ($T_P$) individuelles, qui sont insérées entre les paquets de données sortis entre deux marches à vide consécutives de la mémoire FIFO (1) et la pause maximale, la valeur est réglée pour la pause ($T_P$) qui doit être insérée entre des paquets de données à sortir par la suite.

**2.** Procédé selon la revendication 1,
**caractérisé en ce que**
la pause maximale est déterminée par le calcul de la somme de la pause ($T_P$) insérée entre les paquets de données et la pause ($T_{FE}$) supplémentaire apparaissant en raison d'une marche à vide de la mémoire FIFO (1).

**3.** Procédé selon la revendication 1 ou la revendication 2,
**caractérisé en ce que**
la valeur de la pause ($T_P$) insérée entre les paquets de données sortis de la mémoire FIFO (1) est enregistrée,

**en ce que** le nombre des paquets de données sortis entre les marches à vide consécutives de la mémoire FIFO (1) est enregistré, et

**en ce que** la somme des pauses ($T_P$) individuelles, qui est insérée entre les paquets de données sortis entre deux marches à vide consécutives de la mémoire FIFO (1), est déterminée par la multiplication du nombre enregistré des paquets de données avec la valeur enregistrée de la pause ($T_P$).

4. Procédé selon la revendication 3,
   **caractérisé en ce que**
   la valeur de la pause ($T_P$), la valeur de la pause ($T_{FE}$) supplémentaire apparaissant dans l'état d'une marche à vide de la mémoire FIFO (1) et le nombre des paquets de données sortis entre deux marches à vide consécutives de la mémoire FIFO (1) sont enregistrés à l'aide d'un compteur (6).

5. Procédé selon l'une quelconque des revendications précédentes,
   **caractérisé en ce que**
   une nouvelle valeur pour la pause ($T_P$) insérée entre les paquets de données sortis de la mémoire FIFO (1) est réglée de telle sorte que la somme des pauses ($T_P$) individuelles qui en résultent, qui sont insérées entre les paquets de données sortis entre deux marches à vide consécutives de la mémoire FIFO (1), est inférieure à la valeur de la pause maximale dans le cas d'une marche à vide de la mémoire FIFO (1).

6. Procédé selon la revendication 5,
   **caractérisé en ce que**
   une nouvelle valeur pour la pause insérée entre les paquets de données sortis de la mémoire FIFO (1) est réglée de telle sorte que la somme des pauses ($T_P$) individuelles, qui sont insérées entre les paquets de données sortis entre deux marches à vide consécutives de la mémoire FIFO (1), cumulée avec une valeur de réserve définie est inférieure à la valeur de la pause maximale entre les paquets de données.

7. Procédé selon l'une quelconque des revendications précédentes,
   **caractérisé en ce que**
   la fréquence de cadence, avec laquelle les données des paquets de données sont sorties de la mémoire FIFO (1), est divisée par deux si la pause ($T_P$) insérée entre les paquets de données sortis est supérieure à la durée dans le temps d'un paquet de données.

8. Dispositif d'adaptation du débit de données d'un flux de données,
   comprenant une mémoire FIFO (1), dans laquelle les paquets de données sont enregistrés avec un premier débit de données et de laquelle les paquets de données sont sortis avec un second débit de données, et avec une commande de mémoire (2) pour la commande de l'enregistrement des paquets de données dans la mémoire FIFO (1) et de la sortie des paquets de données de la mémoire FIFO (1),
   **caractérisé en ce que**
   la commande de mémoire (2) pour la commande de la mémoire FIFO (1) est conçue de telle sorte que les paquets de données sont sortis de la mémoire FIFO (1) avec une certaine pause ($T_P$) dans le temps fixé entre les paquets de données,
   **en ce que** la commande de mémoire (2) est conçue pour l'enregistrement d'une marche à vide de la mémoire FIFO (1),
   **en ce que** la commande de mémoire (2) est conçue pour l'enregistrement d'une pause supplémentaire apparaissant dans le cas d'une marche à vide de la mémoire FIFO (1), afin de déterminer la valeur d'une pause maximale entre deux paquets de données consécutifs, et
   **en ce que** la commande de mémoire (2) est conçue de telle sorte que, par une comparaison de la somme des pauses ($T_P$) individuelles, qui sont insérées entre les paquets de données sortis entre deux marches à vide consécutives de la mémoire FIFO (1), avec la valeur de la pause maximale, elle règle une nouvelle valeur pour la pause ($T_P$), qui doit être insérée entre des paquets de données à sortir ensuite de la mémoire FIFO (1).

9. Dispositif selon la revendication 8,
   **caractérisé en ce que**
   la commande de mémoire (2) est conçue pour la mise en oeuvre du procédé selon l'une quelconque des revendications 1 à 7.

10. Dispositif selon la revendication 8 ou la revendication 9,
    **caractérisé en ce que**

la commande de mémoire (2) comprend au moins un compteur (6) pour l'enregistrement de la valeur actuelle de la pause ($T_P$) insérée entre les paquets de données sortis de la mémoire FIFO (1), de la pause supplémentaire apparaissant dans le cas d'une marche à vide de la mémoire FIFO (1) et d'un nombre des paquets de données sortis de la mémoire FIFO (1) entre les deux marches à vide consécutives de la mémoire FIFO (1),

la commande de mémoire (2) déterminant le total des pauses ($T_P$) individuelles, qui sont insérées entre les paquets de données sortis entre les deux marches à vide successives de la mémoire FIFO (1), par multiplication du nombre enregistré des paquets de données sortis entre les deux marches à vide consécutives avec la valeur actuelle enregistrée de la pause ($T_P$) insérée.

**11.** Dispositif selon l'une quelconque des revendications 8 à 10,
**caractérisé en ce que**
la commande de mémoire (2) est conçue de telle sorte qu'elle règle une nouvelle valeur pour la pause ($T_P$) insérée entre les paquets de données sortis de la mémoire FIFO (1) de telle sorte que la somme en résultant des pauses ($T_P$) individuelles, qui sont insérées entre les paquets de données sortis entre deux marches à vide consécutives de la mémoire FIFO (1), est inférieure à la valeur de la pause maximale.

**12.** Dispositif selon la revendication 11,
**caractérisé en ce que**
la commande de mémoire (2) est conçue de telle sorte qu'elle règle une nouvelle valeur pour la pause ($T_P$) insérée entre les paquets de données sortis de la mémoire FIFO (1) de telle sorte que la somme en résultant des pauses ($T_P$) individuelles, qui sont insérées entre les paquets de données sortis entre deux marches à vide consécutives de la mémoire FIFO (1), cumulée avec une valeur de réserve déterminée est inférieure à la valeur de la pause maximale.

**13.** Dispositif selon l'une quelconque des revendications 8 à 11,
**caractérisé en ce que**
la commande de mémoire (2) est conçue pour la division par deux d'une fréquence de cadence de sortie de données de la mémoire FIFO (1) dans le cas où la valeur de la pause ($T_P$) insérée entre les paquets de données sortis de la mémoire FIFO (1) est supérieure à la durée dans le temps d'un paquet de données.

## FIG 1

## FIG 6

### STAND DER TECHNIK

A)

B)

## FIG 2

## FIG 3

EP 1 384 140 B1

# FIG 4

A)

| 8MHz | CRATE | 1/4 | 1/8 | 1/16 | 1/32 |
|---|---|---|---|---|---|
| QPSK | 1/2 | 5,400 | 6,000 | 6,353 | 6,545 |
| | 2/3 | 7,200 | 8,000 | 8,471 | 8,727 |
| | 3/4 | -8,100 | 9,000 | 9,529 | 9,818 |
| | 5/6 | 9,000 | 10,000 | 10,588 | 10,909 |
| | 7/8 | 9,450 | 10,500 | 11,118 | 11,455 |
| 16 QAM | 1/2 | 10,800 | 12,000 | 12,706 | 13,091 |
| | 2/3 | 14,400 | 16,000 | 16,941 | 17,455 |
| | 3/4 | 16,200 | 18,000 | 19,059 | 19,636 |
| | 5/6 | 18,000 | 20,000 | 21,176 | 21,818 |
| | 7/8 | 18,900 | 21,000 | 22,235 | 22,909 |
| 64 QAM | 1/2 | 16,200 | 18,000 | 19,059 | 19,636 |
| | 2/3 | 21,600 | 24,000 | 25,412 | 26,182 |
| | 3/4 | 24,300 | 27,000 | 28,588 | 29,455 |
| | 5/6 | 27,000 | 30,000 | 31,765 | 32,727 |
| | 7/8 | 28,350 | 31,500 | 33,353 | 34,364 |

B)

| 7MHz | CRATE | 1/4 | 1/8 | 1/16 | 1/32 |
|---|---|---|---|---|---|
| QPSK | 1/2 | 4,725 | 5,250 | 5,559 | 5,727 |
| | 2/3 | 6,300 | 7,000 | 7,412 | 7,636 |
| | 3/4 | 7,088 | 7,875 | 8,338 | 8,591 |
| | 5/6 | 7,875 | 8,750 | 9,265 | 9,545 |
| | 7/8 | 8,269 | 9,188 | 9,728 | 10,023 |
| 16 QAM | 1/2 | 9,450 | 10,500 | 11,118 | 11,455 |
| | 2/3 | 12,600 | 14,000 | 14,824 | 15,273 |
| | 3/4 | 14,175 | 15,750 | 16,676 | 17,182 |
| | 5/6 | 15,750 | 17,500 | 18,529 | 19,091 |
| | 7/8 | 16,538 | 18,375 | 19,455 | 20,045 |
| 64 QAM | 1/2 | 14,175 | 15,750 | 16,676 | 17,182 |
| | 2/3 | 18,900 | 21,000 | 22,235 | 22,909 |
| | 3/4 | 21,263 | 23,625 | 25,015 | 25,773 |
| | 5/6 | 23,625 | 26,250 | 27,794 | 28,636 |
| | 7/8 | 24,806 | 27,563 | 29,184 | 30,068 |

# FIG 4

C)

| 6MHz | CRATE | 1/4 | 1/8 | 1/16 | 1/32 |
|---|---|---|---|---|---|
| QPSK | 1/2 | 4,050 | 4,500 | 4,765 | 4,765 |
| | 2/3 | 5,400 | 6,000 | 6,353 | 6,353 |
| | 3/4 | 6,075 | 6,750 | 7,147 | 7,147 |
| | 5/6 | 6,750 | 7,500 | 7,941 | 7,941 |
| | 7/8 | 7,088 | 7,875 | 8,338 | 8,338 |
| 16 QAM | 1/2 | 8,100 | 9,000 | 9,530 | 9,530 |
| | 2/3 | 10,800 | 12,000 | 12,706 | 12,706 |
| | 3/4 | 12,150 | 13,500 | 14,294 | 14,294 |
| | 5/6 | 13,500 | 15,000 | 15,883 | 15,883 |
| | 7/8 | 14,175 | 15,750 | 16,677 | 16,677 |
| 64 QAM | 1/2 | 12,150 | 13,500 | 14,294 | 14,294 |
| | 2/3 | 16,200 | 18,000 | 19,059 | 19,059 |
| | 3/4 | 18,225 | 20,250 | 21,442 | 21,442 |
| | 5/6 | 20,250 | 22,500 | 23,824 | 23,824 |
| | 7/8 | 21,263 | 23,625 | 25,015 | 25,015 |

# FIG 5

| CONST. | CRATE | 8k | 2k |
|--------|-------|----|----|
| QPSK | 1/2 | 3,7058824 | 0,9264706 |
| | 2/3 | 4,9411765 | 1,2352941 |
| | 3/4 | 5,5588235 | 1,3897059 |
| | 5/6 | 6,1764706 | 1,5441176 |
| | 7/8 | 6,4852941 | 1,6213235 |
| 16 QAM | 1/2 | 7,4117647 | 1,8529412 |
| | 2/3 | 9,8823529 | 2,4705882 |
| | 3/4 | 11,117647 | 2,7794118 |
| | 5/6 | 12,352941 | 3,0882353 |
| | 7/8 | 12,970588 | 3,2426471 |
| 64 QAM | 1/2 | 11,117647 | 2,7794118 |
| | 2/3 | 14,823529 | 3,7058824 |
| | 3/4 | 16,676471 | 4,1691176 |
| | 5/6 | 18,529412 | 4,6323529 |
| | 7/8 | 19,455882 | 4,8639706 |